(19) Europäisches Patentamt
European Patent Office
Office européen des brevets

(11) EP 4 734 342 A1

(12) EUROPÄISCHE PATENTANMELDUNG

(43) Veröffentlichungstag:
29.04.2026 Patentblatt 2026/18

(21) Anmeldenummer: 24208738.5

(22) Anmeldetag: 24.10.2024

(51) Internationale Patentklassifikation (IPC):
H02K 24/00 (2006.01)    G01D 5/20 (2006.01)

(52) Gemeinsame Patentklassifikation (CPC):
H02K 24/00; G01D 5/2046

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder:
• Dr. Johannes Heidenhain GmbH
83301 Traunreut (DE)

• LTN Servotechnik GmbH
83624 Otterfing (DE)

(72) Erfinder:
• WANGLER, Nicolai
83236 Übersee (DE)
• PIELOK, Gerhard
81241 München (DE)
• RISSING, Lutz
80337 München (DE)

(54) **BAUGRUPPE FÜR EINEN RESOLVER UND VERFAHREN ZUR HERSTELLUNG EINES RESOLVERS**

(57)     Die Erfindung betrifft eine Baugruppe (2, 3) für einen Resolver (1), umfassend einen entlang einer Achse (A) angeordneten Grundkörper (4.1, 4.2), mehrere Blechpaketsegmente (5a - 5p) und Drahtwicklungen (6) und zumindest ein mit den Blechpaketsegmenten (5a - 5p) gekoppeltes Schlussmittel (7a - 7p). Der Grundkörper (4.1, 4.2) ist ringförmig ausgebildet und weist entlang seines Innenumfangs Aufnahmemittel (4.1.1) auf, in welche die Blechpaketsegmente (5a - 5p) formschlüssig aufgenommen sind. Am Außenumfang des Grundkörpers (4.1, 4.2) sind zwischen den Aufnahmemitteln (4.11) Wicklungsräume (8) angeordnet, innerhalb denen die Drahtwicklungen (6) teilweise verlaufen.

Die Erfindung betrifft ferner ein Verfahren zur Herstellung eines Resolvers (1).

FIG. 2

EP 4 734 342 A1

**Beschreibung**

## GEBIET DER TECHNIK

Als Resolver bezeichnet man in der Elektrotechnik einen elektromagnetischen Messumformer zur Wandlung der Winkellage eines Rotors in eine elektrische Größe bzw. in elektrische Signale. Der Begriff Resolver umfasst in dieser Anwendung auch Messumformer, die als Synchro oder Drehmelder oder als RVDT (Rotary Variable Differential Transformer) bezeichnet werden.

Zur Detektion der absoluten Position beinhalten Resolver beispielsweise Statorwicklungen und Rotorwicklungen, welche gegenüberliegend angeordnet sind. Diese meist aus Kupferdraht gefertigten Drahtwicklungen werden auf einstückig ausgebildete Blechpakete gewickelt, die Kavitäten für die Drahtwicklungen aufweisen. Die Kavitäten des Rotors sind in der Regel außenliegend am Blechpaket des Rotors angeordnet und lassen sich entsprechend gut automatisiert von außen aufbringen. Dem gegenüber ergibt sich für das Aufbringen der Statorwicklungen das Problem, dass ein Bewickeln der meistens am Innenumfang liegenden Kavitäten nur durch komplexe maschinelle Wickelverfahren oder von Hand realisierbar ist.

Derartige Resolver werden meist in großen Stückzahlen hergestellt, so dass hier eine einfache, möglichst hochautomatisierbare Fertigung der Statoren und Rotoren angestrebt wird.

## STAND DER TECHNIK

Aus der Offenlegungsschrift JP H05 292 721 A ist ein Resolver mit einem Statoraufbau bekannt, bei dem das Aufbringen der Drahtwicklungen von au-βen erfolgt. Hierzu wird zunächst ein einstückig ausgebildeter Statorkern an seiner Außenumfangsseite mit Nuten versehen. Nach dem Anbringen der Statorwicklungen in die Nuten von der äußeren Umfangsseite aus wird ein Gehäusering von außen auf das Statorpaket montiert. Abschließend wird der Statorkern auf der inneren Umfangsseite spanend abgetragen, sodass die zuvor eingebrachten Nuten freigelegt werden.

Ein derartiger Statoraufbau hat Nachteile hinsichtlich der Ausschussrate, da die Drahtwicklungen beim Freilegen der Nuten beschädigt werden können. Zudem ist der beschriebene Aufbau der Statorbaugruppe relativ aufwändig in der Herstellung und ebenfalls nachteilig hinsichtlich der Messgenauigkeit.

## ZUSAMMENFASSUNG DER ERFINDUNG

Der Erfindung liegt die Aufgabe zugrunde eine Baugruppe für einen Resolver zu schaffen, welche sich vergleichsweise optimal automatisierbar herstellen lässt.

Diese Aufgabe wird erfindungsgemäß durch die Merkmale des Anspruchs 1 bzw. des Anspruchs 12 gelöst. Vorteilhafte Ausgestaltungen und Weiterbildungen sind in den jeweils abhängigen Ansprüchen angegeben.

Die erfindungsgemäße Baugruppe für einen Resolver umfasst einen entlang einer Achse angeordneten Grundkörper, mehrere im Grundkörper angeordnete Blechpaketsegmente und Drahtwicklungen und zumindest ein mit den Blechpaketsegmenten gekoppeltes Schlussmittel. Der Grundkörper ist ringförmig ausgebildet und weist entlang seines Innenumfangs Aufnahmemittel auf, in welche die Blechpaketsegmente formschlüssig aufgenommen sind. Am Außenumfang des Grundkörpers sind zwischen den Aufnahmemitteln axial verlaufende Wickelräume angeordnet, innerhalb denen die Drahtwicklungen teilweise verlaufen.

Die formschlüssige Aufnahme der Blechpaketsegmente durch die Aufnahmemittel des Grundkörpers ist durch ein spielfreies Ineinandergreifen der beiden Verbindungspartner charakterisiert. Dabei sind die relativen Bewegungen der Blechpaketsegmente in zumindest zwei Richtungen und vorzugsweise in allen Richtungen blockiert.

Die Aufnahmemittel sind in äquidistanten Abständen zueinander angeordnet und erstrecken sich in axialer Richtung. Die Aufnahmemittel können beispielsweise durch radial angeordnete rechteckige Strukturen ausgebildet sein, die eine Kavität zur Aufnahme der Blechpaketsegmente bilden.

Unter dem Begriff Kavität ist insbesondere eine offene Kavität zu verstehen, d. h. die Blechpaketsegmente müssen nicht zwangsweise vollständig von den umschließenden Strukturen des Grundkörpers umgeben sein.

Die Wickelräume sind auf der äußeren Umfangsseite des Grundkörpers zwischen den Aufnahmemitteln angeordnet Die Wickelräume dienen als Verlegekanäle für die Drahtwicklungen. Insbesondere können die Wickelräume auch durch die Aufnahmemittel ausgebildet sein, sodass die Aufnahmemittel einerseits die Funktion der Aufnahme der Blechpaketsegmente erfüllen und andererseits als Wickelraumbegrenzung für die dazwischen angeordneten Drahtwicklungen dienen.

Gemäß einer vorteilhaften Weiterbildung der Erfindung ist die Baugruppe ein Stator des Resolvers.

In weiterer Ausgestaltung weist der Grundkörper an zumindest einer seiner Stirnseiten zumindest eine in Umfangsrichtung verlaufende Lasche mit radial orientierter und ergänzend oder alternativ mit axial orientierter Richtungskomponente auf.

Die Lasche kann beispielsweise in der Umfangsrichtung kontinuierlich ausgebildet sein, sodass zwischen der Lasche und den Wickelräumen ein in Umfangsrichtung orientierter Verlegekanal ausgebildet wird, welcher gleichzeitig als Wickelraumbegrenzung für die in Umfangsrichtung verlaufenden Abschnitte der Drahtwicklungen dient.

Alternativ können auch mehrere Laschen vorgesehen sein, welche in der Umfangsrichtung diskontinuierlich angeordnet sind.

Mit Vorteil ist der Grundkörper mehrstückig oder alternativ einstückig ausgebildet und aus einem nicht-magnetischen Werkstoff geformt.

Insbesondere kann der Grundkörper zweistückig ausgebildet sein, sodass dieser ein erstes Grundkörperteil und ein zweites Grundkörperteil umfasst, welche miteinander gekoppelt werden können. Die Kopplungsstelle bzw. Kopplungsstellen liegen dabei bevorzugt entlang der Umfangsrichtung der beiden Grundkörperteile.

Bevorzugt handelt es sich bei dem nicht-magnetischen Werkstoff um einen umformbaren Werkstoff ohne ferromagnetische Eigenschaften, beispielsweise um einen chemisch oder thermisch plastifizierbaren Kunststoff bzw. Kunststoffgemische, Kunstharze, Keramik oder um Glas.

In weiterer Ausgestaltung ist der Grundkörper durch einen Spritzgussprozess oder einen additiven Prozess hergestellt.

Der additive Prozess zur Herstellung des Grundkörpers kann auch als 3D-Druckprozess bezeichnet werden.

Ferner ist vorgesehen,

- dass die Blechpaketsegmente jeweils einen radial innen liegenden Umfangsabschnitt einen radial außen liegenden Verbindungsabschnitt und einen dazwischen angeordneten Trägerabschnitt aufweisen,

- dass das Schlussmittel Verbindungsmittel aufweist, die komplementär zu den Verbindungsabschnitten der Blechpaketsegmente ausgebildet sind,

- dass die Verbindungsabschnitte der Blechpaketsegmente mit den Verbindungsmitteln zumindest eines Schlussmittels ineinandergreifend zusammengefügt sind.

Der Verbindungsabschnitt der Blechpaketsegmente umfasst beispielsweise zumindest eine Nut, wobei dann die Verbindungsmittel des zumindest einen Schlussmittels als komplementäre Zapfen ausgebildet sind. Alternativ können auch die Verbindungsabschnitte der Blechpaketsegmente komplementäre Zapfen zu den am zumindest einen Schlussmittel ausgebildeten Nuten aufweisen.

Bevorzugt erfolgt das Verbinden der Verbindungsabschnitte der Blechpaketsegmente mit den Verbindungsmitteln des Schlussmittels über eine oder mehrere zapfenartige Verbindungen, beispielsweise in Form von Schwalbenschwanzverbindungen. Jedoch sind auch andere Verbindungstechniken denkbar, beispielsweise eine stoffschlüssige Verbindung mittels eines leitfähigen Stoffschlussmittels oder durch Verschweißen.

Insbesondere eine Ausgestaltung der zapfenartigen Verbindungen mit einer runden Kontur ist vorteilhaft, da dies zu einem vorteilhafteren magnetischen Leitungsverhalten zwischen den Blechpaketsegmenten und den Schlussmitteln führt.

Mit Vorteil sind die Blechpaketsegmente derart ausgebildet, dass die Breite der Verbindungsabschnitte kleiner ist als die Breite der Umfangsabschnitte.

Durch eine derartige Ausgestaltung der Verbindungsabschnitte ist eine vorteilhaftere Übertragung des durch die Umfangsabschnitte aufgenommenen magnetischen Flusses hin zum Schlussmittel möglich.

In weiterer Ausgestaltung ist das zumindest eine Schlussmittel als Blechpaket ausgebildet und entweder als ein über den Umfang geschlossener Ring oder in Form mehrerer einzelner Ringsegmente bzw. Ringsektoren ausgestaltet.

Bei Schlussmitteln in der Form von Ringsegmenten kann es sich insbesondere um Teilsektoren eines Kreisrings handeln, beispielsweise um zwei Halbkreisringe oder mehrere Teilkreissektoren eines Kreisrings.

Bei einer Ausgestaltung der Schlussmittel als Halbkreisringe ist es beispielsweise vorteilhaft, diese abschnittsweise über 90° rotationssymmetrisch auszubilden.

Bei einer Ausgestaltung der Schlussmittel als Teilkreissektoren ist jedes der Schlussmittel in der Umfangsrichtung an die Verbindungsabschnitte zweier Blechpaketsegmente gekoppelt. Insbesondere erfolgt hierbei eine Kopplung für jedes der Schlussmittel an mindestens zwei Verbindungsabschnitte, die bezüglich der Umfangsrichtung zu benachbarten Blechpaketsegmenten gehören.

Mit Vorteil sind die Blechpaketsegmente im Grundkörper eingebettet, sodass die Umfangsabschnitte und der Grundkörper an der inneren Mantelfläche der Baugruppe eine im Wesentlichen ebene Fläche bilden und der Grundkörper sich bis zu den Trägerabschnitten der Blechpaketsegmente erstreckt.

Der Begriff "eben" ist im weiteren Sinne zu verstehen, d. h. die mit einem definierten Radius gekrümmte innere Mantelfläche der Baugruppe ist im vollständig bestückten Zustand des Grundkörpers mit den Blechpaketsegmenten weitestgehend plan und ohne eine Unebenheit. In jedem Fall ist in diesem Zusammenhang nicht zu verstehen, dass die innere Mantelfläche eine zweidimensionale gerade Ebene beschreibt.

Folglich ist der Radius der Krümmung der Umfangsabschnitte der Blechpaketsegmente im Wesentlichen gleich dem Radius der Krümmung der inneren Mantelfläche (Stege) des Grundkörpers:

$$R_U = R_{M,i}$$

mit

$R_U :=$ Radius der Umfangsabschnitte;
$R_{M,i} :=$ Radius der äußeren Mantelfläche des Grundkörpers;

Die Aufnahmemittel des Grundkörpers sind derart ausgestaltet, dass die Kontur der Aufnahmemittel jener Kontur der Trägerabschnitte der Blechpaketsegmente entspricht und sich über ihre gesamte Tiefe an diese anschmiegt. Die Aufnahmemittel des Grundkörpers fungiert in diesem Abschnitt somit als Isolation zwischen den Blechpaketsegmenten und den im Bereich der Trägerabschnitte angeordneten Drahtwicklungen. Ein Anschmiegen der Aufnahmemittel des Grundkörpers an die Außenkontur der Blechpaketsegmente erfolgt insbesondere in den Bereichen der Umfangsabschnitte und der Trägerabschnitte. Die Verbindungsabschnitte ragen über die Aufnahmemittel heraus und sind folglich nicht in den Grundkörper eingebettet.

In weiterer Ausgestaltung weist der Grundkörper mehrere erste Laschen und mehrere zweite Laschen mit radialer Richtungskomponente auf, wobei die ersten und zweiten Laschen entlang der Umfangsrichtung alternierend angeordnet sind.

Das erfindungsgemäße Verfahren zur Herstellung eines Resolvers, der zwei relativ zueinander um eine Achse drehbare Baugruppen aufweist, umfasst zur Herstellung mindestens einer der Baugruppen jeweils folgende Schritte:

- Zumindest teilweises Einbetten von Blechpaketsegmenten in einen durch einen Spritzgussprozess oder additiven Prozess ausgebildeten Grundkörper,

- Aufbringen von Drahtwicklungen auf den Außenumfang des Grundkörpers in zwischen den Blechpaketsegmenten ausgebildete Wickelräume,

- Zusammenfügen der freiliegenden Abschnitte der Blechpaketsegmente mit zumindest einem Schlussmittel.

Das Aufbringen der Drahtwicklungen auf den Außenumfang des Grundkörpers erfolgt hierbei insbesondere mittels einer automatisierten Wickeltechnik von außen, beispielsweise mittels einer Flyer-Wickeltechnik, einer Nadelwickeltechnik oder einer Linearwickeltechnik. Beispielsweise erstrecken sich hierbei die Drahtwicklungen bezüglich der Umfangsrichtung teilweise über mehr als ein Blechpaketsegment.

In weiterer Ausgestaltung erfolgt das Einbetten der Blechpaketsegmente durch Einfügen der Blechpaketsegmente in die Aufnahmemittel des Grundkörpers.

Hierbei können die einzelnen Blechpaketsegmente beispielsweise radial oder axial in die Aufnahmemittel des Grundkörpers durch Einschieben bzw. Einpressen eingefügt werden. Durch die formschlüssige Ausgestaltung der Aufnahmemittel verbleiben die Blechpakete dann in den Kavitäten, gehalten durch die Aufnahmemittel. Das heißt das Herstellen des Grundkörpers und das Einbetten der Blechpaketsegmente erfolgen in zwei separaten Schritten.

Ergänzend kann vorgesehen sein, dass auf die Aufnahmemittel vor dem Einfügen der Blechpaketsegmente ein Stoffschlussmittel aufgetragen wird, beispielsweise ein Kleber, um die Blechpaketsegmente nicht lösbar zu befestigen.

In weiterer alternativer Ausgestaltung erfolgt das Einbetten der Blechpaketsegmente durch das Ausbilden des Grundkörpers mittels einem Umspritzen der Blechpaketsegmente.

Das heißt, das Herstellen des Grundkörpers und das Einbetten der Blechpaketsegmente erfolgen im selben Schritt.

Erfolgt die Herstellung des Grundkörpers beispielsweise durch einen Spritzgussprozess, werden die einzelnen Blechpaketsegmente in das Spritzgießwerkzeug eingesetzt und anschließend der fließfähige Werkstoff eingespritzt.

Erfolgt die Herstellung des Grundköpers alternativ durch einen additiven Prozess, werden die Blechpaketsegmente - nach dem Erzeugen der initialen Lagen auf einem Untergrund - auf dem Vorläufer des Grundkörpers platziert und das Umspritzen der Blechpaketsegmente durch ein Aneinanderreihen von Lagen fortgesetzt, bis der Grundkörper vollständig ausgebildet ist.

Mit Vorteil erfolgt das Aufbringen der Drahtwicklungen radial von außen und entlang des Außenumfangs der Baugruppe.

Bei dem Aufbringen der Drahtwicklungen wird der Wicklungsdraht beispielsweise durch die Flyer-Wickeltechnik (auch "Flying Wire" genannt) in die am Außenumfang angeordneten Wicklungsräume der zu bewickelnden Baugruppe, beispielsweise eines Stators, eingebracht. Der Wicklungsdraht wird über eine Rolle oder durch eine Düse, die an einem Flyer, d. h. eine sich drehende Scheibe, zugeführt, der in einem Bestimmten Abstand zur Baugruppe definiert rotiert wird. Der Wicklungsdraht wird hierbei um zumindest ein, durch die Aufnahmemittel isoliertes, Blechpaketsegment definiert gewickelt. Der Flyer ist bezüglich der Baugruppe bevorzugt relativ in der Umfangsrichtung und in der radialen Richtung bewegbar.

Ein Aufbringen der Drahtwicklungen ausgehend vom Innenumfang der Baugruppe ist somit nicht vorgesehen. Dies gilt sowohl für den Fall, dass die Baugruppe als Rotor ausgebildet ist, als auch für den Fall, dass die Baugruppe als Stator ausgebildet ist.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

## KURZE BESCHREIBUNG DER ZEICHNUNGEN

Fig. 1      zeigt ein Ausführungsbeispiel eines Resolvers mit Stator und Rotor;

Fig. 2     zeigt ein Ausführungsbeispiel einer Baugruppe des Resolvers in Explosionsdarstellung;

Fig. 3     zeigt ein Ausführungsbeispiel eines ersten Grundkörperteils des Resolvers in perspektivischer Ansicht;

Fig. 4     zeigt ein Ausführungsbeispiel eines zweiten Grundkörperteils des Resolvers in perspektivischer Ansicht;

Fig. 5     zeigt ein Ausführungsbeispiel eines Blechpaketsegments in Vorderansicht;

Fig. 6     zeigt ein Ausführungsbeispiel eines Schlussmittels in Vorderansicht;

Fig. 7     zeigt einen ersten Arbeitsschritt zum Zusammenfügen einer Baugruppe eines Resolvers;

Fig. 8     zeigt einen weiteren Arbeitsschritt zum Zusammenfügen der Baugruppe des Resolvers aus Fig. 7;

Fig. 9     zeigt einen weiteren Arbeitsschritt zum Zusammenfügen der Baugruppen des Resolvers aus Fig. 7 und Fig. 8;

Fig. 10     zeigt eine Schnittansicht durch eine Baugruppe des Resolvers.

## BESCHREIBUNG DER AUSFÜHRUNGSFORMEN

Eine spezifische Ausführungsform der vorliegenden Erfindung wird im Folgenden unter Bezugnahme der Zeichnungen genauer beschrieben.

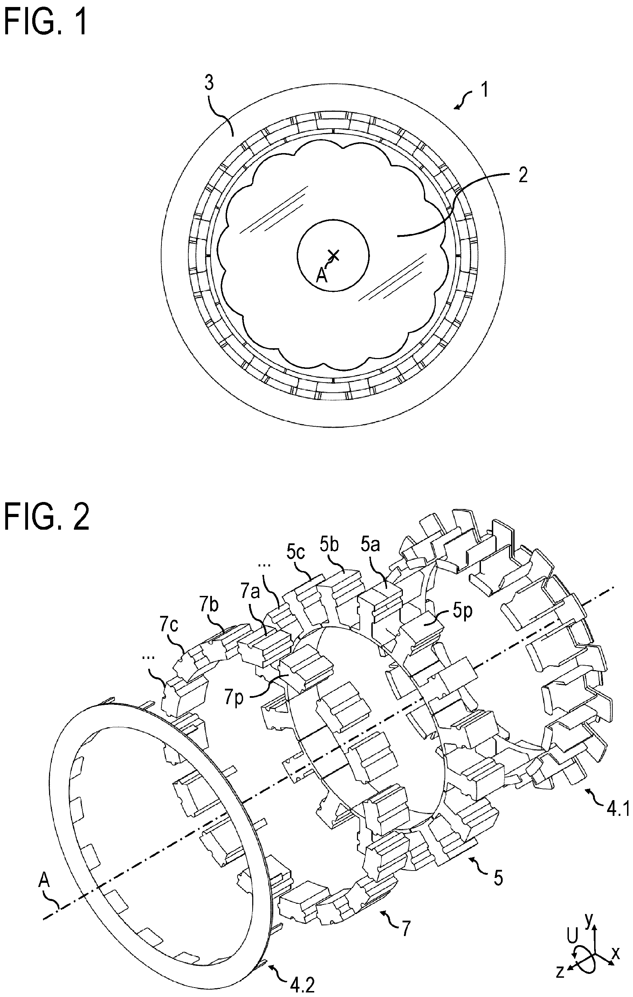

Dabei zeigt Fig. 1 einen Resolver 1, umfassend einen Stator 3 und einen Rotor 2, welche konzentrisch zu einer Achse A angeordnet sind. Bei dem gezeigten Resolver 1 ist der Stator 3 mehrteilig ausgebildet, sodass bei dessen Herstellung ein Bewickeln von außen möglich ist, worauf im Folgenden noch näher eingegangen wird. Der gezeigte Rotor 2 ist lediglich beispielhaft als Rotorkern mit variierender Kontur ausgebildet. Statt dem in Fig. 1 gezeigten Rotortyp sind jedoch auch weitere Rotortypen denkbar, beispielsweise vom Typ Wickelfeld, bei dem Erregerwicklungen auf dem Rotor 2 angeordnet sind.

Fig. 2 zeigt einen erfindungsgemäßen Stator 3 in Explosionsdarstellung, welcher entlang der Achse A angeordnet ist. Der Stator 3 umfasst einen mehrstückig ausgebildeten Grundkörper 4.1, 4.2, eine Blechpaketsegmentebaugruppe 5, eine Schlussmittelbaugruppe 7 und Drahtwicklungen 6 (in Fig. 2 nicht dargestellt).

Der Grundkörper besteht aus einem ersten Grundkörperteil 4.1 und einem zweiten Grundkörperteil 4.2, welche miteinander koppelbar sind.

Die Blechpaketsegmentebaugruppe 5 umfasst mehrere Blechpaketsegmente 5a bis 5p, welche konzentrisch um die Achse A und mit gleichem Abstand zur Achse A angeordnet sind.

Zur besseren Übersichtlichkeit besitzt nicht jedes der Blechpaketsegmente in Fig. 2 ein eigenes Bezugszeichen. Es versteht sich jedoch, dass die alphanumerischen Bezugzeichen in der Umfangsrichtung U je weiterem Blechpaketsegment logisch fortgesetzt werden.

Die Schlussmittelbaugruppe 7 umfasst gemäß dem gezeigten Ausführungsbeispiel mehrere Schlussmittel 7a bis 7p, welche konzentrisch um die Achse A und mit gleichem Abstand zur Achse A angeordnet sind.

Zur besseren Übersichtlichkeit besitzt nicht jedes der Schlussmittel in Fig. 2 ein eigenes Bezugszeichen. Es versteht sich jedoch, dass auch hier die alphanumerischen Bezugzeichen in der Umfangsrichtung U je weiterem Schlussmittel logisch fortgesetzt werden.

Der gezeigte Stator ist nicht auf die in Fig. 2 dargestellte Anzahl von sechzehn Blechpaketsegmente 5a bis 5p bzw. sechzehn Schlussmittel 7a bis 7p beschränkt, d. h. es können auch mehr oder weniger Blechpaketsegmente bzw. Schlussmittel vorgesehen sein. Insbesondere muss hierbei die Anzahl der Schlussmittel nicht zwangsläufig der Anzahl der Blechpaketsegmente entsprechen.

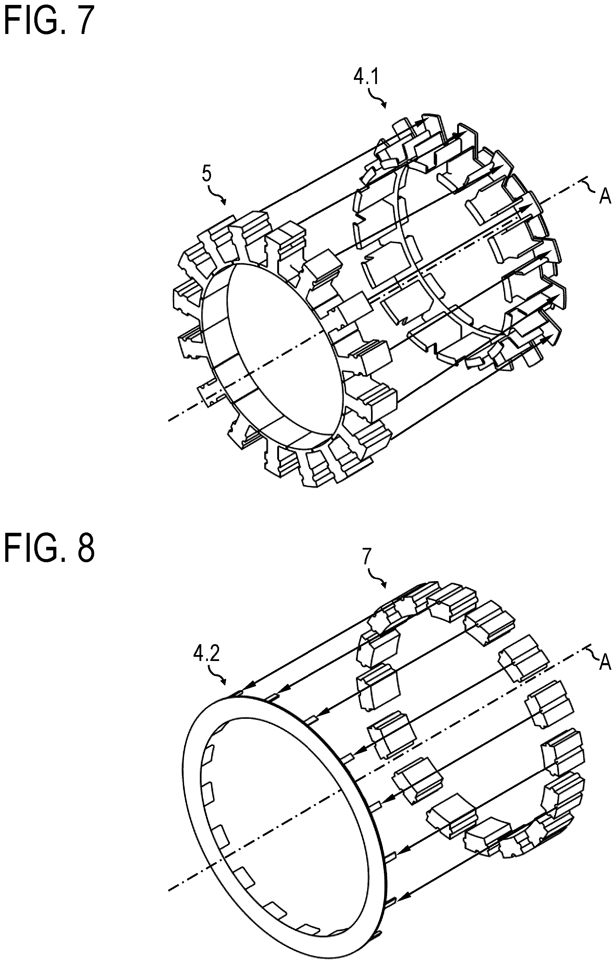

Die einzelnen Baugruppen des Stators 3 sind im zusammengebauten Zustand miteinander gekoppelt, worauf im Rahmen des Herstellungsprozesses in den Fig. 7 bis 9 näher eingegangen wird.

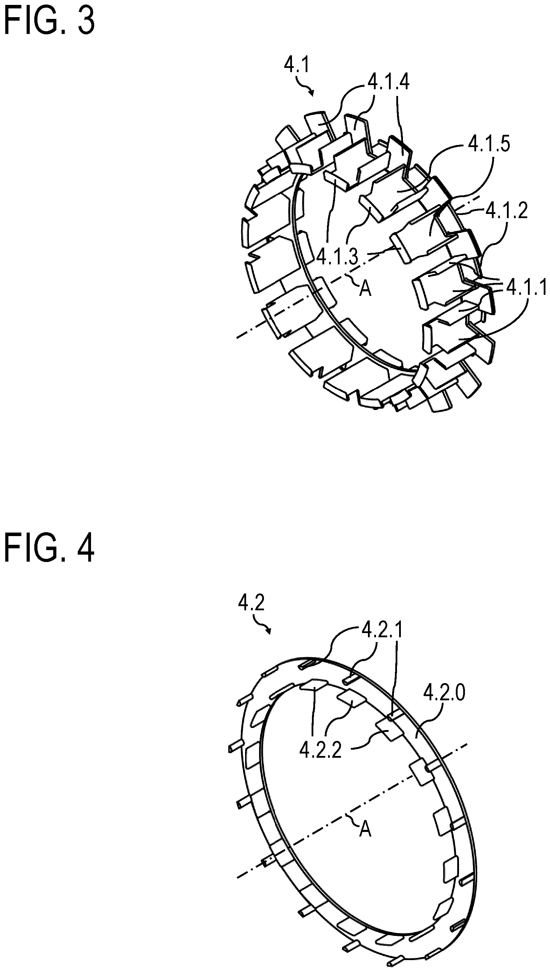

Die Ausgestaltung des Grundkörpers, umfassend das erste und zweite Grundkörperteil 4.1, 4.2, ist in Fig. 3 und Fig. 4 gezeigt.

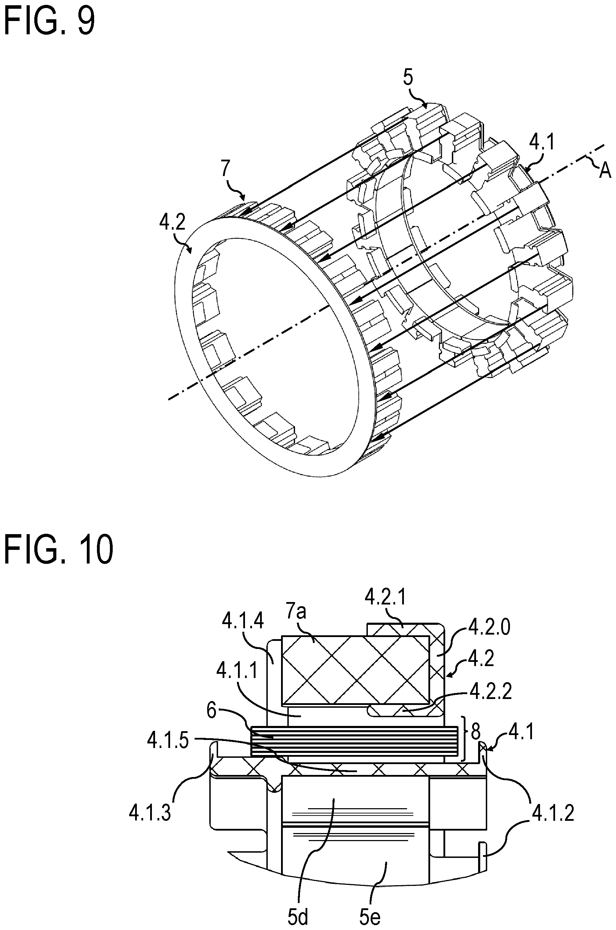

Das erste Grundkörperteil 4.1 ist als ringförmiges Spritzgussteil ausgebildet und umfasst mehrere axial verlaufende rechteckige Aufnahmemittel 4.1.1, welche sich über den gesamten Umfang des ersten Grundkörperteils beabstandet erstrecken. Jeweils zwei unmittelbar benachbarte Aufnahmemittel 4.1.1 sind über einen in der Umfangsrichtung U verlaufenden Steg 4.1.5 miteinander näherungsweise U-förmig verbunden, sodass zwischen ihnen ein Wicklungsraum 8 (siehe Fig. 10) ausgebildet ist.

Die Stege 4.1.5 ragen an ihren beiden Enden in axialer Richtung über die Aufnahmemittel 4.1.1 hinaus und besitzen an einem Ende eine radial orientierte zweite Lasche 4.1.2 und am anderen Ende eine radial orientierte weitere zweite Lasche 4.1.3. Die beiden zweiten Laschen 4.1.2, 4.1.3 dienen als Wickelraumbegrenzung bzw. in Kombination mit den hinausragenden Abschnitten der Stege 4.1.5 als Verlegekanäle für jene Abschnitte der Drahtwicklungen 6, welche in der Umfangsrichtung U orientiert sind.

Es ist vorgesehen, dass jeweils zwischen zwei benachbarten Aufnahmemitteln 4.1.1, welche nicht durch einen Steg 4.1.5 verbunden sind, eine erste Lasche 4.1.4 vorhanden ist. Diese erste Lasche 4.1.4 ist rechteckig ausgebildet und verläuft senkrecht zu den Aufnahmemitteln 4.1.1 und in der Umfangsrichtung U.

Die ersten Laschen 4.1.4 ragen bevorzugt in der radialen Richtung über die Aufnahmemittel 4.1.1 hinaus. Zudem erstrecken sich die ersten Laschen 4.1.4 in der Umfangsrichtung U nur über jenen Bereich, der zwischen den zwei benachbarten Aufnahmemitteln 4.1.1, welche nicht durch einen Steg 4.1.5 verbunden sind, liegt.

Die radiale Richtung ist definiert als eine Richtung, die ausgehend von der Achse A (Mittelpunkt) nach außen zeigt.

Die Aufnahmemittel 4.1.1, die Stege 4.1.5, die ersten Laschen 4.1.4 und die zweiten Laschen 4.1.2 und 4.2.3 sind alle zusammenhängend ausgebildet, sodass diese gemeinsam das einstückige erste Grundkörperteil 4.1 ausbilden.

Fig. 4 zeigt das zweite Grundkörperteil 4.2, welches auch als ringförmiges Spritzgussteil ausgebildet ist und eine in der Umfangsrichtung U geschlossene erste Lasche in Form einer Ringscheibe 4.2.0 umfasst. An einer der Stirnseiten der Ringscheibe 4.2.0 und radial innen liegend sind mehrere zweite Laschen 4.2.2 angeordnet, welche rechteckig ausgebildet sind. Die zweiten Laschen 4.2.2 stehen senkrecht zur Stirnseite der Ringscheibe 4.2.0 in axialer Richtung ab und sind in der Umfangsrichtung U beabstandet zueinander angeordnet.

Das zweite Grundkörperteil 4.2 umfasst zusätzlich weitere zweite Laschen in Form von Ausrichtestiften 4.2.1, welche in axialer Richtung und senkrecht zu jener Stirnseite angeordnet sind, auf der sich auch die zweiten Laschen 4.2.2 befinden. Die Ausrichtestifte 4.2.1 sind auf der Stirnseite der Ringscheibe 4.2.0 radial außen angeordnet. Bevorzugt ist dabei je ein Ausrichtestift 4.2.1 gegenüber einer zweiten Lasche 4.2.2 und in der Umfangsrichtung zentriert zu dieser angeordnet. Die Zentrierstifte 4.2.1 können neben dem in Fig. 4 dargestellten halbkreisförmigen Querschnitt auch eine beliebige andere Querschnittsgeometrie besitzen, welche komplementär zu der Ausnehmung 7.3 eines Schlussmittels 7a bis 7p ist.

Die Ringscheibe 4.2.0, die zweiten Laschen 4.2.2 und die Zentrierstifte 4.2.1 sind alle zusammenhängend ausgebildet, sodass diese gemeinsam das einstückige zweite Grundkörperteil 4.2 ausbilden.

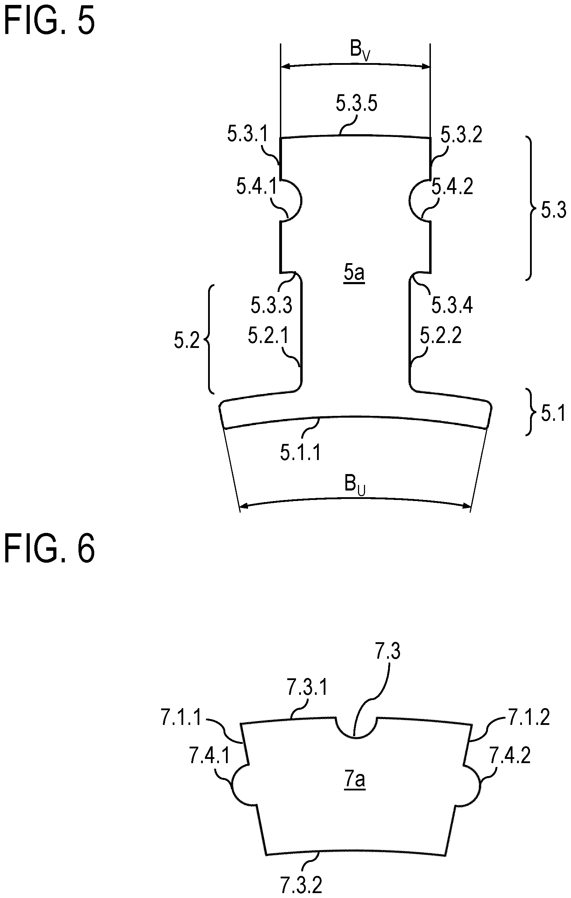

Der Aufbau eines erfindungsgemäßen Blechpaketsegments wird nachfolgend beispielhaft am in Fig. 5 gezeigten Blechpaketsegment 5a erläutert, wobei die übrigen Blechpaketsegmente 5b bis 5p identisch ausgebildet sind.

Das T-förmig ausgebildete Blechpaketsegment 5a umfasst einen Umfangsabschnitt 5.1, einen Verbindungsabschnitt 5.3 und einen zwischen dem Umfangsabschnitt 5.1 und dem Verbindungsabschnitt 5.3 angeordneten Trägerabschnitt 5.2.

Der Trägerabschnitt 5.2 ist in einer radialen Richtung orientiert und weist näherungsweise einen rechteckigen Querschnitt auf. Der Trägerabschnitt 5.2 weist eine erste Seite 5.2.1 und eine zweite Seite 5.2.2 auf, welche nach dem Einbetten des Blechpaketsegments 5a in den Grundkörper 4.1, 4.2 in Kontakt mit den entsprechenden Aufnahmeabschnitten 4.1.1 steht.

Am Trägerabschnitt 5.2 ist der Verbindungsabschnitt 5.3 angeordnet, welcher bezüglich der Achse A radial außen liegt. Der Verbindungsabschnitt 5.3 weist eine erste Seite 5.3.1 und eine zweite Seite 5.3.2 auf, welche als Kontaktflächen für jeweils ein Schlussmittel 7a - 7p dienen. Die erste und zweite Seite 5.3.1, 5.3.2 des Verbindungsabschnitts 5.3 weisen jeweils eine Nut 5.4.1, 5.4.2 auf, welche komplementär zu dem oder den Zapfen 7.1 des entsprechenden Schlussmittels 7a - 7p ausgebildet ist/sind. Der Übergang 5.3.3 zwischen der ersten Seite 5.2.1 des Trägerabschnitts 5.2 und der ersten Seite 5.3.1 des Verbindungsabschnitts 5.3 ist stetig ausgebildet und umfasst eine definierte Krümmung. Entsprechendes gilt für den Übergang 5.3.4 zwischen der zweiten Seite 5.2.2 des Trägerabschnitts 5.2 und der zweiten Seite 5.3.2 des Verbindungsabschnitts 5.3, welches auch eine definierte Krümmung umfasst. Der Verbindungsabschnitt 5.3 verfügt zudem über eine zweite Seitenfläche 5.3.5, welche zwischen der ersten und zweiten Seite 5.3.1, 5.3.2 angeordnet ist. Die zweite Seitenfläche 5.3.5 bildet eine Teilfläche der äußeren Mantelfläche des Stators 2 und ist in der Umfangsrichtung U gekrümmt ausgebildet.

Wie Fig. 5 zu entnehmen ist, ist der Verbindungsabschnitt 5.3 in der Umfangsrichtung U breiter ausgebildet als der Trägerabschnitt 5.2, d. h. der Verbindungsabschnitt 5.3 ragt über den Trägerabschnitt 5.2 hinaus.

Die Breite des Verbindungsabschnitts 5.3 in der Umfangsrichtung U ist in Fig. 5 mit dem Bezugszeichen Bv bezeichnet.

Am Trägerabschnitt 5.2 ist zudem der Umfangsabschnitt 5.1 angeordnet, welcher entlang der Umfangsrichtung U gekrümmt ausgebildet ist und sowohl über die erste und zweite Seite 5.2.2, 5.2.2 des Trägerabschnitts 5.2, als auch über die erste und zweite Seite 5.3.1, 5.3.2 des Verbindungsabschnitts 5.3 hinausragt. Der Umfangsabschnitt 5.1 ist in radialer Richtung am Verbindungsabschnitt 5.3 angeordnet und liegt näher an der Achse A als der Verbindungsabschnitt 5.3 oder der Trägerabschnitt 5.2. Der Umfangsabschnitt 5.1 besitzt eine erste Seitenfläche 5.1.1, welche eine Teilfläche der inneren Mantelfläche des Stators 2 bildet. Die erste Seitenfläche 5.1.1 ist in der Umfangsrichtung U gekrümmt ausgebildet.

Die Breite des Umfangsabschnitts 5.1 in der Umfangsrichtung U ist in Fig. 5 mit dem Bezugszeichen Bu bezeichnet.

Wie in Fig. 5 gut zu erkennen ist, ist die Breite Bv des Verbindungsabschnitts 5.3 kleiner als die Breite Bu des Umfangsabschnitts 5.1. Durch eine derartige Ausgestaltung des Verbindungsabschnitts 5.3 ist eine vorteilhaftere Übertragung des durch den Umfangsabschnitt 5.1 aufgenommenen magnetischen Flusses hin zu den Schlussmitteln 7a - 7p möglich.

Das Blechpaketsegment 5a besteht aus mehreren Einzelblechen, welche in Richtung der Zeichnungsebene in Fig. 5 (d. h. in z-Richtung in Fig. 1) gestapelt sind. Die Einzelbleche des Blechpaketsegments 5a sind aus einem weichmagnetischen Blech gestanzt und können eine Dicke zwischen 0,1 mm und 1,0 mm aufweisen.

Der Aufbau eines erfindungsgemäßen Schlussmittels 7a wird nachfolgend beispielhaft am in Fig. 6 gezeigten Schlussmittel 7a erläutert, wobei die übrigen Schlussmittel 7b - 7p identisch ausgebildet sind.

Das Schlussmittel 7a ist bezüglich seiner Grundform ringsektorartig ausgebildet und umfasst eine radiale erste Seite 7.1.1 und eine radiale zweite Seite 7.1.2 sowie eine in der Umfangsrichtung U gekrümmte erste Seitenfläche 7.3.1 und eine in der Umfangsrichtung U gekrümmte zweite Seitenfläche 7.3.2.

Die erste und zweite Seite 7.1.1, 7.1.2 dienen jeweils als Kontaktfläche für einen Verbindungsabschnitt 5.3 eines Blechpaketsegments 5a - 5p. Hierzu weisen die erste und zweite Seite 7.1.1 und 7.1.2 jeweils einen (oder mehrere) entsprechend den Nuten 5.4.1, 5.4.2 des Blechpaketsegments 5a komplementär ausgebildete(n) Zapfen 7.4.1, 7.4.2 auf. Zwischen der ersten und zweiten Seite 7.1.1, 7.1.2 ist die erste Seitenfläche 7.3.1 und die zweite Seitenfläche 7.3.2 angeordnet.

Die erste Seitenfläche 7.3.1 umfasst eine Ausnehmung 7.3, welche zur Aufnahme eines Ausrichtestifts 4.2.1 des zweiten Grundkörperteils 4.2 dient (siehe Fig. 8 und Fig. 10).

Die zweite Seitenfläche 7.3.2 liegt bezüglich der Achse A in radialer Richtung weiter innen als die erste Seitenfläche 7.3.1.

Das Schlussmittel 7a besteht aus mehreren Einzelblechen, welche in Richtung der Zeichnungsebene in Fig. 6 (d. h. in z-Richtung in Fig. 1) gestapelt sind. Die Einzelbleche des Schlussmittels 7a sind aus einem weichmagnetischen Blech gestanzt und können eine Dicke zwischen 0,1 mm und 1,0 mm aufweisen.

Im Folgenden soll näher auf das Verfahren zur Herstellung des erfindungsgemäßen Stators 3 unter Bezugnahme der Fig. 7 bis 9 eingegangen werden.

Gemäß Fig. 7 wird zunächst die Blechpaketsegmentebaugruppe 5 in das erste Grundkörperteil 4.1 eingebettet, indem die einzelnen Blechpaketsegmente 5a bis 5p eingefügt werden. Hierzu werden die einzelnen Blechpaketsegmente 5a bis 5p derart eingefügt, sodass sie durch die Aufnahmemittel 4.1.1 formschlüssig, und bevorzugt auch kraftschlüssig, aufgenommen sind und gegen ein Verrutschen gesichert sind. Die einzelnen Blechpaketsegmente 5a bis 5p kontaktieren hierbei im Bereich ihres Trägerabschnitts 5.2 zwei benachbarte Aufnahmemittel 4.1.1, d. h. durch zumindest teilweisen Kontakt mit der ersten und zweiten Seite 5.2.1, 5.2.2. Die einzelnen Blechpaketsegmente 5a bis 5p werden in axialer Richtung eingefügt, bis sie an der ersten Lasche 4.1.4 des ersten Grundkörperteils 4.1 anliegen.

Durch die Aufnahmemittel 4.1.1 des ersten Grundkörperteils 4.1 sind die einzelnen Blechpaketsemente 5a bis 5p im Bereich der Umfangsabschnitte 5.1 definiert zueinander beabstandet angeordnet, d. h. es liegt ein Spalt zwischen den Umfangsabschnitten 5.1 der einzelnen Blechpaketsemente 5a bis 5p in Form eines Luftspalts vor. Hierdurch wird erreicht, dass beim Betrieb des Resolver 1 der magnetische Widerstand zwischen einem Blechpaketsegment 5a über das zumindest eine Schlussmittel 7a bis 7p zu einem benachbarten Blechpaketsegment 5b oder 5p geringer ist als über den direkten Weg, d. h. über den Spalt zwischen den Blechpaketsegmenten 5a und 5b bzw. 5a und 5p im Bereich der Umfangsabschnitte 5.1. Gleiches gilt natürlich bezüglich aller anderen Blechpaketsemente 5a bis 5p zueinander. Mit anderen Worten wird durch den Luftspalt erreicht, dass sich die durch die Blechpaketsegmente 5a bis 5p geleiteten Magnetfeldlinien über die Schlussmittel 7a bis 7p schlie-βen und nicht eine "Abkürzung" von Pol zu Pol im Bereich der Umfangsabschnitte 5.1 nehmen.

Nach dem Kombinieren der Blechpaketsegmentebaugruppe 5 mit dem ersten Grundkörperteil 4.1 können die Wicklungen 6 über eine geeignete Wickeltechnik, welche vorzugsweise automatisiert abläuft, aufgebracht werden. Hierbei werden die einzelnen Wicklungen 6 auf die Aufnahmemittel 4.1.1 und ersten Laschen 4.1.4 im Bereich der einzelnen Trägerabschnitte 5.2 gewickelt (in Fig. 7 und Fig. 9 nicht dargestellt).

Besonders vorteilhaft ist hierbei, dass durch die erfindungsgemäße Ausgestaltung der Blechpaketsegmente 5a bis 5p und ihre Anordnung zu einer Blechpaketsegmentebauruppe 5 in Kombination mit dem ersten Grundkörperteil 4.1 ein Bewickeln von außen möglich ist, d. h. das Befüllen der einzelnen Wicklungsräume 8 erfolgt radial von außen (äußere Mantelfläche der Baugruppe) und nicht wie bei Statoren sonst üblich über den Innenumfang (innere Mantelfläche der Baugruppe).

Wie Fig. 8 zu entnehmen ist, erfolgt das Einbetten der Schlussmittelbaugruppe 7 in das zweite Grundkörperteil 4.2 durch ein Einfügen der einzelnen Schlussmittel 7a bis 7p. Hierzu werden die einzelnen Schlussmittel 7a bis 7p jeweils in die Kavität zwischen einer zweiten Lasche 4.2.2 und einem gegenüberliegenden Zentrierstift 4.2.1 eingefügt. Jedes Schlussmittel 7a bis 7p liegt somit jeweils mit seiner zweiten Seitenfläche 7.3.2 an einer zweiten Lasche 4.2.2 an und ist über einen in der Ausnehmung 7.3 aufgenommen Zentrierstift 4.2.1 ausgerichtet und gegen ein Verrutschen gesichert. Die einzelnen Schlussmittel 7a bis 7p werden jeweils in axialer Richtung eingefügt, bis sie an der Ringscheibe 4.2.0 des zweiten Grundkörperteils 4.2 anliegen.

Fig. 9 zeigt das Einfügen der ersten kombinierten Baugruppe, umfassend das erste Grundkörperteil 4.1 und die Blechpaketsegmentebaugruppe 5, in die zweite kombinierte Baugruppe, umfassend das zweite Grundkörperbauteil 4.2 und die Schlussmittelbaugruppe 7.

Bei dem Einfügevorgang werden, wie in Fig. 9 gezeigt, die Verbindungsabschnitte 5.3 der Blechpaketsegmente 5a bis 5p mit den Schlussmitteln 7a bis 7p kombiniert, sodass die Zapfen 7.4.1, 7.4.2 der Schlussmittel 7s bis 7p und die Nuten 5.4.1, 5.4.2 der Blechpaketsegmente 5a bis 5p ineinandergreifen, beispielsweise durch eine Presspassung.

Fig. 10 zeigt eine Schnittdarstellung durch den Stator 3 inklusive der Wicklungen 6, welche im Wicklungsraum 8 angeordnet sind. Der Wicklungsraum 8 ist in der axialen Richtung durch die zweiten Laschen 4.1.2, 4.1.3 des ersten Grundkörperteils 4.1 und in radialer Richtung durch den Steg 4.1.5 und die zweite Lasche 4.2.2 des zweiten Grundkörperteils 4.2 begrenzt.

Die Erfindung ist vorstehend unter Bezugnahme auf einige derzeit bevorzugte Ausführungsformen beschrieben. Es versteht sich jedoch von selbst, dass weitere Varianten und Ausführungsformen ohne Abweichung von den beiliegenden Patentansprüchen realisiert werden können.

So ist es beispielsweise auch möglich, dass es sich bei der Baugruppe 2, 3 neben einem Stator 3 um einen Rotor 2 vom Typ Wickelfeld handeln kann. In diesem Fall werden die Blechpaketsegmente 5a bis 5p in radialer Richtung invertiert angeordnet, d. h. die Umfangsabschnitte 5.1 befinden sich bezüglich der Achse A radial außen und die Verbindungsabschnitte 5.3 radial innen. Die in der Umfangsrichtung U gekrümmten Umfangsabschnitte 5.1 der Blechpaketsegmente 5a bis 5p bilden dann den Außenumfang des Rotors 2. Die Verbindungsabschnitte 5.3 und das zumindest eine Schlussmittel 7a bis 7p befinden sich dann am Innenumfang des ringförmigen Rotors 2.

**BEZUGSZEICHENLISTE**

| | |
|---|---|
| 1 | Resolver |
| 2 | Rotor |
| 3 | Stator |
| 4 | Grundkörper |
| 4.1 | erstes Grundkörperteil |
| 4.1.1 | Aufnahmemittel des ersten Grundkörperteils |
| 4.1.2 | zweite Lasche des ersten Grundkörperteils |
| 4.1.3 | weitere Lasche des ersten Grundkörperteils |
| 4.1.4 | erste Lasche des ersten Grundkörperteils |
| 4.1.5 | Steg des ersten Grundkörperteils |
| 4.2 | zweites Grundkörperteil |
| 4.2.0 | Ringscheibe des zweiten Grundkörperteils |
| 4.2.1 | Ausrichtestift des zweiten Grundkörperteils |
| 4.2.2 | zweite Lasche des zweiten Grundkörperteils |
| 5 | Blechpaketsegmentebaugruppe |
| 5a-5p | Blechpaketsegment |
| 5.1 | Umfangsabschnitt eines Blechpaketsegments |
| 5.1.1 | erste Seitenfläche des Blechpaketsegments |
| 5.2 | Trägerabschnitt eines Blechpaketsegments |
| 5.2.1 | erste Seite des Trägerabschnitts |
| 5.2.2 | zweite Seite des Trägerabschnitts |
| 5.3 | Verbindungsabschnitt eines Blechpaketsegments |
| 5.3.1 | erste Seite des Verbindungsabschnitts |

| | |
|---|---|
| 5.3.2 | zweite Seite des Verbindungsabschnitts |
| 5.3.3 | erster Übergang |
| 5.3.4 | zweiter Übergang |
| 5.3.5 | zweite Seitenfläche des Blechpaketsegments |
| 6 | Drahtwicklungen |
| 7 | Schlussmittelbaugruppe |
| 7a-7p | Schlussmittel |
| 7.1.1 | erste Seite des Schlussmittels |
| 7.1.2 | zweite Seite des Schlussmittels |
| 7.3 | Ausnehmung des Schlussmittels |
| 7.3.1 | erste Seitenfläche des Schlussmittels |
| 7.3.2 | zweite Seitenfläche des Schlussmittels |
| 7.4.1 | erster Zapfen des Schlussmittels |
| 7.4.2 | zweiter Zapfen des Schlussmittels |
| 8 | Wicklungsraum |
| A | Achse |
| U | Umfangsrichtung |
| $B_V$ | Breite eines Verbindungsabschnitts |
| $B_U$ | Breite eines Umfangsabschnitts |
| $R_U$ | Radius der Umfangsabschnitte; |
| $R_{M,i}$ | Radius der äußeren Mantelfläche des Grundkörpers; |

**Patentansprüche**

1. Baugruppe (2, 3) für einen Resolver (1), umfassend einen entlang einer Achse (A) angeordneten Grundkörper (4.1, 4.2), mehrere Blechpaketsegmente (5a - 5p) und Drahtwicklungen (6) und zumindest ein mit den Blechpaketsegmenten (5a - 5p) gekoppeltes Schlussmittel (7a - 7p),

   wobei der Grundkörper (4.1, 4.2) ringförmig ausgebildet ist und entlang seines Innenumfangs Aufnahmemittel (4.1.1) aufweist, in welche die Blechpaketsegmente (5a - 5p) formschlüssig aufgenommen sind,
   wobei am Außenumfang des Grundkörpers (4.1, 4.2) zwischen den Aufnahmemitteln (4.11) Wicklungsräume (8) angeordnet sind, innerhalb denen die Drahtwicklungen (6) teilweise verlaufen.

2. Baugruppe gemäß Anspruch 1, wobei die Baugruppe (3) ein Stator des Resolvers (1) ist.

3. Baugruppe gemäß zumindest einem der vorhergehenden Ansprüche, wobei der Grundkörper (4.1, 4.2) an zumindest einer seiner Stirnseiten zumindest eine in Umfangsrichtung (U) verlaufende Lasche (4.1.2, 4.1.3, 4.1.4, 4.2.2) mit radial und/oder axial orientierter Richtungskomponente aufweist.

4. Baugruppe gemäß zumindest einem der vorhergehenden Ansprüche, wobei der Grundkörper (4) mehrstückig und aus einem nicht-magnetischen Werkstoff geformt ist.

5. Baugruppe gemäß zumindest einem der vorhergehenden Ansprüche, wobei der Grundkörper (4.1, 4.2) durch einen Spritzgussprozess oder einen additiven Prozess hergestellt ist.

6. Baugruppe gemäß zumindest einem der vorhergehenden Ansprüche, wobei:

   • die Blechpaketsegmente (5a-5p) jeweils einen radial innen liegenden Umfangsabschnitt (5.1) einen radial außen liegenden Verbindungsabschnitt (5.3) und einen dazwischen angeordneten Trägerabschnitt (5.2) aufweisen,
   • das Schlussmittel (7a-7p) Verbindungsmittel (7.4.1, 7.4.2) aufweist, die komplementär zu den Verbindungsabschnitten (5.13,...) der Blechpaketsegmente (5.10) ausgebildet sind,
   • die Verbindungsabschnitte (5.3) der Blechpaketsegmente (5a-5p) mit den Verbindungsmitteln (7.4.1, 7.4.2) des Schlussmittels (7a-7p) ineinandergreifend zusammengefügt sind.

7. Baugruppe gemäß Anspruch 6, wobei die Blechpaketsegmente (5a-5p) derart ausgebildet sind, dass die Breite ($B_Z$) der Verbindungsabschnitte (5.3) kleiner ist als die Breite (Bu) der Umfangsabschnitte (5.1).

8. Baugruppe gemäß zumindest einem der vorhergehenden Ansprüche, wobei das zumindest eine Schlussmittel (7a-7p) als Blechpaket ausgebildet ist und entweder als ein über den Umfang geschlossener Ring ausgebildet ist oder mehrere Ringsegmente umfasst.

9. Baugruppe gemäß Anspruch 6 und 8, wobei jedes Ringsegment des zumindest einen Schlussmittels (7a-7p) in der Umfangsrichtung (U) an zwei Verbindungsabschnitte (5.3) der Blechpaketsegmente (5a-5p) gekoppelt ist.

10. Baugruppe gemäß Anspruch 6, wobei die Blechpaketsegmente (5a-5p) im Grundkörper (4.1) eingebettet sind, sodass die Umfangsabschnitte (5.1) und der Grundkörper (4.1) eine ebene Fläche bilden und der Grundkörper (4.1) sich bis zu den Trägerabschnitten (5.2) der Blechpaketsegmente (5a-5p) erstreckt.

11. Baugruppe gemäß Anspruch 3, wobei der Grundkörper (4.1, 4.2) mehrere erste Laschen (4.1.4) und mehrere zweite Laschen (4.1.2, 4.1.3) mit radialer Richtungskomponente aufweist, wobei die ersten und zweiten Laschen (4.1.4; 4.1.2, 4.1.3) entlang der Umfangsrichtung (U) alternierend angeordnet sind.

12. Verfahren zur Herstellung eines Resolvers (1), der zwei relativ um eine Achse (A) drehbare Baugruppen (2, 3) umfasst, wobei zur Herstellung von zumindest einer der Baugruppen (2, 3) folgende Schritte erfolgen:

   • Zumindest teilweises Einbetten von Blechpaketsegmenten (5a-5p) in einen durch einen Spritzgussprozess oder additiven Prozess ausgebildeten Grundkörper (4.1),
   • Aufbringen von Drahtwicklungen (6) auf den Außenumfang des Grundkörpers (4.1) in zwischen den Blechpaketsegmenten (55a-5p) ausgebildete Wickelräume (8),
   • Zusammenfügen der freiliegenden Abschnitte der Blechpaketsegmente (55a-5p) mit zumindest einem Schlussmittel (7a-7p).

13. Verfahren gemäß Anspruch 12, wobei das Einbetten der Blechpaketsegmente (5a-5p) durch ein Einfügen der Blechpaketsegmente (5a-5p) in Aufnahmemittel (4.1.1) des Grundkörpers (4.1) erfolgt.

14. Verfahren gemäß Anspruch 12, wobei das Einbetten der Blechpaketsegmente (5a-5p) durch Ausbilden des Grundkörpers (4.1, 4.2) mittels Umspritzen der Blechpaketsegmente (5a-5p) erfolgt.

15. Verfahren gemäß zumindest einem der Ansprüche 12 bis 14, wobei das Aufbringen der Drahtwicklungen (6) radial von außen und entlang des Außenumfangs der Baugruppe (2,3) erfolgt.

# FIG. 1

# FIG. 2

FIG. 3

FIG. 4

# FIG. 5

# FIG. 6

# FIG. 7

# FIG. 8

# FIG. 9

# FIG. 10

Europäisches
Patentamt

European
Patent Office

Office européen
des brevets

**EUROPÄISCHER RECHERCHENBERICHT**

Nummer der Anmeldung

EP 24 20 8738

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | ABRAMENKO VALERII ET AL: "Novel modular design of a position-sensing resolver", 2021 IEEE INTERNATIONAL ELECTRIC MACHINES & DRIVES CONFERENCE (IEMDC), IEEE, 17. Mai 2021 (2021-05-17), Seiten 1-6, XP033926783, DOI: 10.1109/IEMDC47953.2021.9449569 [gefunden am 2021-06-08] | 12-15 | INV. H02K24/00 G01D5/20 |
| A | * Abbildung 1 * <br> * Seite 2 * | 1-11 | |
| Y | DE 10 2014 205328 A1 (TAMAGAWA SEIKI CO LTD [JP]) 3. Juni 2015 (2015-06-03) | 12-15 | |
| A | * Abbildung 1 * | 1-11 | |
| A | MI WENYUAN ET AL: "Investigation on Rotor-Pole Number Cooperation Strategy by Phase Shift in Modular Flux Switching Permanent Magnet Resolvers", IECON 2023- 49TH ANNUAL CONFERENCE OF THE IEEE INDUSTRIAL ELECTRONICS SOCIETY, IEEE, 16. Oktober 2023 (2023-10-16), Seiten 1-5, XP034470469, DOI: 10.1109/IECON51785.2023.10312510 [gefunden am 2023-11-16] * Abbildung 1 * | 1-15 | |
| A | DE 11 2016 006743 T5 (MITSUBISHI ELECTRIC CORP [JP]) 27. Dezember 2018 (2018-12-27) * Abbildungen 1,9 * | 1-15 | |

**RECHERCHIERTE SACHGEBIETE (IPC)**

H02K
G01D

Der vorliegende Recherchenbericht wurde für alle Patentansprüche erstellt

| Recherchenort | Abschlußdatum der Recherche | Prüfer |
|---|---|---|
| Den Haag | 5. März 2025 | Güvener, Cem |

**ANHANG ZUM EUROPÄISCHEN RECHERCHENBERICHT
ÜBER DIE EUROPÄISCHE PATENTANMELDUNG NR.**

EP 24 20 8738

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2025

| Im Recherchenbericht angeführtes Patentdokument | Datum der Veröffentlichung | Mitglied(er) der Patentfamilie | Datum der Veröffentlichung |
|---|---|---|---|
| DE 102014205328 A1 | 03-06-2015 | DE 102014205328 A1 | 03-06-2015 |
| | | GB 2522962 A | 12-08-2015 |
| | | HK 1209240 A1 | 24-03-2016 |
| | | JP 6248251 B2 | 20-12-2017 |
| | | JP 2015106977 A | 08-06-2015 |
| DE 112016006743 T5 | 27-12-2018 | CN 108886314 A | 23-11-2018 |
| | | DE 112016006743 T5 | 27-12-2018 |
| | | JP 6529662 B2 | 12-06-2019 |
| | | JP WO2017179207 A1 | 06-09-2018 |
| | | WO 2017179207 A1 | 19-10-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H05292721 A